Europäisches Patentamt

European Patent Office

Office européen des brevets

(11) Veröffentlichungsnummer: **0 133 851**
**A2**

(12) **EUROPÄISCHE PATENTANMELDUNG**

(21) Anmeldenummer: **83111404.6**

(22) Anmeldetag: **15.11.83**

(51) Int. Cl.⁴: **B 29 C 43/18**
**// B29L31/26**

(30) Priorität: **13.08.83 DE 3329386**

(43) Veröffentlichungstag der Anmeldung: **13.03.85**
**Patentblatt 85/11**

(84) Benannte Vertragsstaaten: **AT BE CH DE FR GB IT LI LU
NL SE**

(71) Anmelder: **Firma Carl Freudenberg, Höhnerweg 2,
D-6940 Weinheim/Bergstrasse (DE)**

(72) Erfinder: **Abresch, Helmut, Wertheimerstrasse 26,
D-6148 Heppenheim 3 (DE)**
Erfinder: **Grieb, Paul, Odenwaldstrasse 12,
D-6940 Weinheim (DE)**
Erfinder: **Hettrich, Gernot, Dr., Starksäckerweg 33,
D-6944 Hemsbach (DE)**
Erfinder: **Kilthau, Gerhard, Dr., Ernsttalerstrasse 18,
D-6800 Mannheim 51 (DE)**

(74) Vertreter: **Weissenfeld-Richters, Helga, Dr.,
Höhnerweg 2, D-6940 Weinheim/Bergstrasse (DE)**

(54) Verfahren zur Herstellung einer Dichtung.

㊗ Verfahren zur Herstellung einer Dichtung, bei dem ein Dichtring aus PTFE hergestellt und mit seinem Halteabschnitt dichtend an einem Haltering aus polymerem Werkstoff festgelegt wird. Hierzu wird der Halteabschnitt angeätzt, der Dichtring mit dem Halteabschnitt in ein Formwerkzeug eingebracht, der verbleibende Freiraum des Formwerkzeuges mit dem polymeren Werkstoff ausgefüllt und der Werkstoff unter Bildung des Halteringes und einer festen Verbindung zu dem Halteabschnitt verfestigt.

EP 0 133 851 A2

DR. H. WEISSENFELD · RICHTERS
PATENTANWÄLTIN

6940 Weinheim/Bergstr.
Höhnerweg 2/4
Telefon 06201 - 80-4494 + 8618
Telex 4 65 531

11. November 1983
Mo/ps
S 292/Europa

- 1 -

Anmelderin: Firma Carl Freudenberg, Weinheim

Verfahren zur Herstellung einer Dichtung

Die Erfindung betrifft ein Verfahren zur Herstellung einer
Dichtung, bei der ein Dichtring aus PTFE hergestellt und
mit seinem Halteabschnitt dichtend an einen Haltering aus
polymerem Werkstoff festgelegt wird.

- 2 -

0133851

Ein solches Verfahren ist aus der DE-OS 24 60 185 bekannt. Dicht- und Haltering werden hierbei aufeinanderliegend in den Zwischenraum zwischen den beiden Spannbacken eines Gehäuses eingefügt. Diese werden anschließend zur Festlegung und Abdichtung des Dichtringes gegeneinandergepreßt, was nur bedingt zu einem befriedigenden Ergebnis führt. Neben dem hohen Preis für die Beschaffung des Gehäuses standen offensichtlich auch technische Probleme einer weiteren Verbreitung entgegen. Diese dürften sich insbesondere aus der Neigung federelastomerer Werkstoffe zum Quellen bei einer Beaufschlagung mit Öl ergeben sowie aus der Neigung solcher Werkstoffe zum Relaxieren, wenn über längere Zeit hohe Vorspannkräfte zu übertragen sind. Beides führt letztlich zu einer Veränderung der über die Oberflächen aufgenommenen Kräfte und damit zu einer Beeinträchtigung der Abdichtung und Festlegung des Dichtringes im Gehäuse.

Desweiteren sind Verfahren bekannt, einen Dichtring aus PTFE mittels gelöster, hochreaktiver Silan- oder Harzverbindungen und gelöster Elastomermischungen als Zwischenschichten mit dem Haltering zu verbinden. Die so hergestellten Werkstoffpaarungen sind neben ihrer aufwendigen und kostenintensiven Oberflächenbehandlung relativ empfindlich gegen chemische und thermische Einflüsse. Die eingebrachten Zwischenschichten zwischen Haltering und PTFE-Dichtring bilden eine zusätzliche dritte Werkstoffkomponente deren chemische und thermische Empfindlichkeit die Funktion der Abdichtung maßgeblich beeinflussen. Die Beständigkeit der hochreaktiven Werkstoffkomponenten ist deutlich schlechter als diejenige des PTFE-Dichtringes und der sonst verwendeten Halteringwerkstoffe.

0133851

Der Erfindung liegt die Aufgabe zugrunde, ein Verfahren zu zeigen, bei dem derartige Schwierigkeiten nicht mehr auftreten. Das vorgeschlagene Verfahren soll einfach durchzuführen sein und die Herstellung einer Verbindung zwischen dem Dichtring und dem Haltering ermöglichen, die sich dauerhaft durch eine hohe mechanische, chemische sowie thermische Widerstandsfähigkeit und Dichtigkeit auszeichnet.

Diese Aufgabe wird erfindungsgemäß mit den kennzeichnenden Merkmalen des Patentanspruches 1 gelöst. Auf vorteilhafte Ausgestaltungen nehmen die Unteransprüche Bezug.

Dem vorgeschlagenen Verfahren liegt die Überlegung zugrunde, die Oberfläche des aus PTFE bestehenden Dichtringes chemisch aufzubrechen und zugleich sensibel zu machen für eine chemische Einbindung in die Molekularstruktur des Halteringes. Dieses Ziel läßt sich besonders vorteilhaft erreichen, wenn der Halteabschnitt durch ein Alkalimetall angeätzt wird, beispielsweise Natrium, welches in flüssigem Ammoniak oder einem ätherischen Polyaryl gelöst ist, beispielsweise in Naphthalin.

Für die Herstellung des Halteringes werden bevorzugt die folgenden Werkstoffe verwendet:

Acrylester-2-Chlorvinyläther-Kautschuk, Nitrilkautschuk und Epoxid-Harze    -Terpolymer-Kautschuk.

Die Härte Shore A soll wenigstens 55 und höchstens 95 betragen.

Neben Elastomerwerkstoffen können auch Duromerwerkstoffe zur Anwendung kommen, beispielsweise ungesättigte Polyester-, Epoxid - Harze, Phenol-Formaldehyd-Harz-Formmassen mit verschiedenen Verstärkungsstoffen, Polyamid, Poly-Ehtylenglykol-Terephthalat-, Poly-Butylenglykol-Terephthalat-, Polycarbonat-, Poly-Phenylsulfon-, Poly-Phenylsulfonoxid-Formmassen.

Thermoplastische Werkstoffe können ebenfalls geeignet sein. Die Festigkeit der Verbindung ist jedoch im einzelnen zu prüfen.

In Anwendungsfällen, in denen die mechanische Widerstandsfähigkeit des Versteifungsringes nicht ausreichend ist, hat es sich als vorteilhaft bewährt, während der Ausformung und Anbindung an den Dichtring eine Verstärkungseinlage miteinzubetten und anzubinden. Diese kann gegebenenfalls aus Stahl bestehen und an das Profil angepaßt sein.

Das vorgeschlagene Verfahren läßt sich relativ einfach anwenden und zeichnet sich durch eine besonders gute Reproduzierbarkeit aus. Es ist daher besonders gut geeignet für die Massenherstellung von Wellendichtringen und ähnlichen Dichtelementen. Diese bestehen im Regelfalle aus nur zwei mit dem abgedichteten Medium in Berührung gelangenden Werkstoffkomponenten, und es bereitet daher keinerlei Schwierigkeiten, praktisch für jeden Anwendungsfall Werkstoffpaarungen zu finden, die sich inert in bezug auf die chemische Einwirkung des abgedichteten Mediums verhalten. Die Festigkeit der Verbindung zwischen dem Dichtring und dem Haltering zeichnet sich daher durch eine besonders gute Dauerhaftigkeit aus. Sie ist auch in thermischer und mechanischer Hinsicht außerordentlich beständig und kann als unlösbar bezeichnet werden.

0133851

<u>Ansprüche</u>

1. Verfahren zur Herstellung einer Dichtung, bei der ein
Dichtring aus PTFE hergestellt und mit seinem Halteabschnitt
dichtend an einem Haltering aus polymerem Werkstoff festgelegt wird, dadurch gekennzeichnet, daß der Halteabschnitt
angeätzt wird, daß der Dichtring mit dem Halteabschnitt
in ein Formwerkzeug eingebracht wird, daß der verbleibende
Freiraum des Formwerkzeuges mit dem polymeren Werkstoff
ausgefüllt wird und daß der Werkstoff unter Bildung des
Halteringes und einer festen Verbindung zu dem Halteabschnitt verfestigt wird.

2. Verfahren nach Anspruch 1, dadurch gekennzeichnet, daß
als polymerer Werkstoff ein chemisch vernetzbarer Werkstoff
verwendet wird und daß dieser nach der Bildung des Halteringes vernetzt und verfestigt wird.

3. Verfahren nach Anspruch 2, dadurch gekennzeichnet, daß
als vernetzbarer Werkstoff ein vulkanisierbarer Werkstoff
verwendet wird.

4. Verfahren nach Anspruch 1 bis 3, dadurch gekennzeichnet,
daß der Halteabschnitt durch ein Alkalimetall in flüssigem
Ammoniak oder in ätherischem Polyaryl angeätzt wird.

5. Verfahren nach Anspruch 4, dadurch gekennzeichnet, daß
als Alkalimetall Natrium verwendet wird.

6. Verfahren nach Anspruch 4 bis 5, dadurch gekennzeichnet,
daß als Polyaryl Naphthalin verwendet wird.

0133851

7. Verfahren nach Anspruch 1 bis 6, dadurch gekennzeichnet, daß in den Freiraum zusätzlich wenigstens eine ringförmig ausgebildete Verstärkungseinlage eingebracht wird.